# EUROPÄISCHE PATENTSCHRIFT

(11) **EP 1 836 835 B1**
(45) Veröffentlichungstag und Bekanntmachung des Hinweises auf die Patenterteilung: **22.10.2014**
(21) Anmeldenummer: 06705782.8
(22) Anmeldetag: 10.01.2006
(51) Int. Cl.: H04M 3/53, H04M 3/42

(54) **VERFAHREN ZUR ÜBERTRAGUNG VON DATEN AN MINDESTENS EIN KOMMUNIKATIONS-ENDSYSTEM UND KOMMUNIKATIONS-EINRICHTUNG ZUR DURCHFÜHRUNG DES VERFAHRENS**
METHOD FOR TRANSMITTING DATA TO AT LEAST ONE COMMUNICATIONS END SYSTEM AND COMMUNICATIONS DEVICE FOR CARRYING OUT SAID METHOD
PROCEDE DE TRANSMISSION DE DONNEES A AU MOINS UN SYSTEME TERMINAL DE COMMUNICATION ET DISPOSITIF DE COMMUNICATION POUR METTRE EN OEUVRE CE PROCEDE

(30) Priorität: 11.01.2005 DE 102005001351
(43) Veröffentlichungstag der Anmeldung: 26.09.2007
(73) Patentinhaber: Teles AG Informationstechnologien, 10587 Berlin (DE)
(72) Erfinder: PAETSCH, Frank, 12357 Berlin (DE); MARHOFF, Christian, 13409 Berlin (DE)
(74) Vertreter: Müller, Wolfram Hubertus
(86) Internationale Anmeldenummer: PCT/DE2006/000043
(87) Internationale Veröffentlichungsnummer: WO 2006/074649

(56) Entgegenhaltungen:
- EP-A- 0 935 379
- EP-A- 1 130 893
- US-B1- 6 449 343

## Beschreibung

Die Erfindung betrifft ein Verfahren zur Übertragung von Daten an mindestens ein Kommunikations-Endsystem und eine Kommunikations-Einrichtung zur Durchführung des Verfahrens. Insbesondere betrifft die Erfindung das automatische Abspielen an einem Kommunikations-Endsystem von Sprachsignalen zu Informationen, die in einer e-mail enthalten sind.

### Hintergrund der Erfindung

Es sind Systeme und Verfahren bekannt, bei denen eine Sprachaufnahme als Anhang einer e-mail versandt und ein Empfänger der e-mail lokal diese Sprachaufnahme abhören kann.

Des weiteren sind Systeme und Verfahren bekannt, die eine SMS-Nachricht, die an eine Festnetz-Nummer gesandt wird, in eine Sprachnachricht umwandeln und die die Sprachnachricht im Rahmen einer üblichen Telefonverbindung an die Festnetz-Nummer übertragen.

Aus der gattungsgemäßen US 6 449 343 B1 ist es bekannt, eine elektronische Nachricht in eine Sprachnachricht umzuwandeln und die umgewandelte Nachricht an ein oder mehrere Telefonempfänger zu übersenden.

Aus der EP 1 130 893 A2 ist ein Telekommunikationssystem bekannt, bei dem Text einer E-Mail Nachricht in eine Audionachricht konvertiert und einem Nutzer übersandt wird. Dabei kann vorgesehen sein, dass mit einer Sprachnachricht Identifizierungsdaten des E-Mail-Absenders an den Empfänger übermittelt werden.

Aus der EP 0 935 379 A2 ist ein Verfahren zur automatischen Umwandlung von Textnachrichten oder dergleichen in Sprache bekannt. Dabei ist vorgesehen, dass der Nutzer eines Endsystems durch Drücken einer Taste bestätigen kann, dass er die aus einer E-Mail generierte Sprachnachricht anhören möchte. Das geschieht vor dem Abspielen der Nachricht.

### Aufgabe der Erfindung

Der vorliegenden Erfindung liegt die Aufgabe zugrunde, ein Verfahren zur Übertragung von Daten an mindestens ein Kommunikations-Endsystem und eine Kommunikations-Einrichtung zur Durchführung des Verfahrens zur Verfügung zu stellen, mit denen in effektiver Weise Informationen an Kommunikations-Endsysteme übertragen werden können, die als Textinformationen oder Audioinformationen vorliegen.

### Zusammenfassung der Erfindung

Diese Aufgabe wird erfindungsgemäß durch ein Verfahren mit den Merkmalen des Anspruchs 1 und eine Kommunikations-Einrichtung mit den Merkmalen des Anspruchs 21 gelöst. Bevorzugte und vorteilhafte Ausgestaltungen der Erfindung sind in den Unteransprüchen angegeben.

Danach sieht die erfindungsgemäße Lösung vor, dass eine an mindestens ein Kommunikations-Endsystem zu übertragende Datenmenge zunächst bereitgestellt wird. Bei der Datenmenge handelt es sich insbesondere um Textdaten oder digitalisierte Audiodaten, die eine bestimmte Information an mindestens einen Nutzer eines Kommunikations-Endsystems enthalten. Integriert in die Datenmenge sind dabei die Empfangsadressen derjenigen Kommunikations-Endsysteme, an die die Datenmenge übertragen werden soll. Bei einem Empfänger ist somit eine Empfangsadresse mit in die Datenmenge integriert, bei mehreren Empfängern eine Liste von Empfangsadressen.

Die Datenmenge wird zunächst über ein erstes Kommunikationsnetz als e-mail an eine Kommunikationseinrichtung übertragen. Das erste Kommunikationsnetz ist ein Paketvermittlungsnetz, insbesondere das Internet. In der Kommunikationseinrichtung oder einer dieser zugeordneten Einrichtung erfolgt ein Umwandeln der Datenmenge in ein Sprachsignal, sofern die Datenmenge nicht bereits ein Sprachsignal enthält. Beispielsweise werden der e-mail als Anhang beigefügte oder in der e-mail enthaltene Textdaten mittels einer Spracherzeugungssoftware in ein Sprachsignal umgewandelt. Wenn die Datenmenge bereits ein Sprachsignal enthält (z.B. wenn der e-mail eine Audiodatei beigefügt ist), so wird dieses lediglich darauf geprüft, ob es einer Formatkonvertierung oder Aufbereitung bedarf, und wird eine solche ggf. durchgeführt.

Das erfindungsgemäße Verfahren sieht des Weiteren vor, dass von der Kommunikations-Einrichtung eine Verbindung über das erste oder ein zweites Kommunikationsnetz zu jedem Kommunikations-Endsystem aufgebaut wird, dessen Empfangsadresse in der Datenmenge enthalten ist. Nach Aufbau der Verbindung und Annahme der Verbindung durch das entsprechende Kommunikations-Endsystem wird das Sprachsignal von der Kommunikations-Einrichtung an das Kommunikations-Endsystem übertragen und wird das Sprachsignal abgespielt.

Die erfindungsgemäße Lösung ermöglicht es, abhängig von in der Datenmenge enthaltenen Empfängeradressen einen oder mehrere Rufe aufzubauen und eine bestimmte Sprachnachricht, die einer in der Datenmenge enthaltenen Textnachricht oder Audio-datei entspricht, an einem oder mehreren Endsystemen abzuspielen. Es wird somit das Versenden von Nachrichten an einzelne oder mehrere Teilnehmer und das automatisierte Abspielen der Nachrichten bei den Teilnehmern als Sprachinformation ermöglicht.

Bei dem zweiten Leitungsvermittlungsnetz handelt es sich beispielsweise um ein Leitungsvermittlungsnetz, etwa ein TDM-Telekommunikationsnetz, wobei das Sprachsignal leitungsvermittelt zu einem Kommunikations-Endsystem übertragen wird. Ebenso kann es sich um ein Mobilfunknetz handeln. In einer weiteren Variante erfolgt eine Datenübertragung von der Kommunikations-Einrichtung zu dem Komunikations-Endsystem per VoIP-Technik unter Verwendung eines Paketvermittlungsnetzes. Die Kommunikations-Einrichtung kann dabei mehrere Schnittstellen besitzen, so dass die genannten Netze wahlweise und abhängig von den Empfangsadressen eingesetzt werden können.

Gemäß der vorliegenden Erfindung wird bei erfolgreichem Abspielen des Signals bei dem Telekommunikations-Endsystem eine Bestätigung ausgelöst und die Bestätigung über den Empfang des Sprachsignals von dem Endsystem ausgesandt. Die Bestätigung wird dabei bevorzugt durch den Nutzer des Endsystems ausgelöst.

Die Bestätigung kann dabei als Innenband-Signal oder alternativ als Außenband-Signal übertragen werden (Innenband-Signalisierung oder Außenband-Signalisierung). Beispiele für eine Innenband-Signalisierung sind die Generierung eines DTMF-Signals oder die Übertragung eines Sprachsignals über die vorhandene Verbindung, wobei das DTMF-Signal durch eine DTMF-Erkennungseinheit bzw. das Sprachsignal durch eine Spracherkennungseinheit beim Empfänger der Bestätigungsinformation ausgewertet wird. Ein Beispiel für eine AußenbandSignalisierung ist die Übertragung einer Bestätigungsinformation über das Internet.

Die Bestätigung über das erfolgreiche Abspielen des Signals bei dem Kommunikations-Endsystem wird in einer ersten Ausgestaltung an die Kommunikations-Einrichtung und dann von dieser an den Absender der Datenmenge übertragen. In einer zweiten Ausgestaltung wird die Bestätigung direkt an den Absender der Datenmenge übertragen, ohne dass die Kommunikations-Einrichtung involviert wird, wobei für diesen Fall die Absenderadresse zusammen mit dem Sprachsignal von der Kommunikations-Einrichtung an das Kommunikations-Endsystem übertragen wird, beispielsweise im Rahmen von beim Rufaufbau auszutauschender Signalisierungsinformationen. Die Bestätigung wird in der zweiten Ausgestaltung immer als Außenband-Signal übertragen.

In einer Ausgestaltung der Erfindung ist vorgesehen, dass dem Sprachsignal Sprachinformationen mit Anweisungen hinzufügt sind, wie der Empfang des Sprachsignals zu bestätigen ist, oder das Sprachsignal bereits solche Informationen enthält. Beispielsweise enthält das Sprachsignal von vornherein die Information, dass eine bestimmte Taste zu drücken ist, um den Empfang der Sprachnachricht zu bestätigen, oder wird eine solche Information dem eigentlichen Sprachsignal in der Kommunikationseinrichtung hinzugefügt. Es kann auf diese Weise sichergestellt werden, dass der Empfang des Sprachsignals mit geringer Fehlerrate erfasst wird.

Gemäß der vorliegenden Erfindung wird eine semantisch deutbare Antwort des Nutzers des Endsystems auf das Sprachsignal erfasst und ausgewertet. Die erfasste Information betrifft also nicht nur, dass das Sprachsignal erfolgreich abgespielt wurde, sondern auch das Erfassen eines semantischen Inhalts der Reaktion des Nutzers. Hierzu sind dem Sprachsignal Sprachinformationen mit Anweisungen hinzufügt, wie der Nutzer des Kommunikations-Endsystems auf das Sprachsignal antworten kann, oder enthält das Sprachsignal bereits solche Informationen. Dabei werden dem Nutzer eine Mehrzahl von alternativen Reaktionsmöglichkeiten und deren Auslösung mitgeteilt.

Ein erstes Beispiel hierfür ist eine Sprachinformation, wie der Nutzer des Kommunikations-Endsystems eine JA-Antwort oder eine NEIN-Antwort erzeugt. Beispielsweise wird mitgeteilt, dass der Nutzer eine bestimmte Taste drücken soll, um mit "JA" zu antworten, und eine bestimmte andere Taste drücken soll, um mit "NEIN" zu antworten. Die Anfragen können jedoch auch differenzierterer Natur sein und dem Nutzer mehr als zwei oder andere Alternativen vorgeben. Beispielsweise wird mitgeteilt, dass der Nutzer eine bestimmte Taste drücken soll, falls er eine Bedingung A erfüllen kann (wie z.B. in einer Zeit von 5 Minuten an einem Unfallort zu sein), und eine bestimmte andere Taste zu drücken, falls er eine bestimmte andere Bedingung B erfüllen kann (wie z.B. in einer Zeit von 10 Minuten an einem Unfallort zu sein), etc.

Im Besetzt-Fall oder bei Nichtannahme des Rufes wird nach einer bestimmten Zeit bevorzugt ein erneuter Verbindungsaufbau durch die Kommunikations-Einrichtung versucht, und der aktuelle Status bevorzugt dem Absender der Datenmenge mitgeteilt. Für den Fall, dass am Kommunikations-Endsystem eine Anrufannahme durch einen Anrufbeantworter erfolgt, wird das Sprachsignal bevorzugt auf den Anrufbeantworter gesprochen. Auch dies wird dem Absender der Datenmenge bevorzugt mitgeteilt.

Allgemein ist bevorzugt vorgesehen, dass dem Absender der Datenmenge durch die Kommunikations-Einrichtung der Zustand des Verbindungsaufbaus und der Übertragung des Sprachsignals zu dem Kommunikations-Endsystem mitgeteilt wird. Dies erfolgt insbesondere durch Übersendung von Datenpaketen über das erste Kommunikationsnnetz.

Die erfindungsgemäße Kommunikations-Einrichtung weist eine erste Schnittstelle zum Empfang von als e-mail übersandten Daten aus einem Paketvermittlungsnetz, mindestens eine zweite Schnittstelle zur Übertragung von Sprachsignalen, und eine Einrichtung auf, die von der ersten Schnittstelle erhaltene Daten in Sprachsignale umwandelt, sofern sie noch nicht als Sprachsignale vorliegen, und diese an die mindestens eine Schnittstelle zur Übertragung von Sprachsignalen weiterleitet. Die erste Schnittstelle ist dabei bevorzugt eine Datenpaketschnittstelle, die paketierte Daten empfängt.

Die Einrichtung umfasst dabei bevorzugt eine Datenpaketempfangseinheit, die in den empfangenen Daten enthaltenen Text oder in den empfangenen Daten enthaltene digitale Audiodaten erkennt und für eine weitere Bearbeitung bereitstellt. In einer ersten bevorzugten Variante wird der Text dabei als e-mail empfangen, wobei die Datenpaketempfangseinheit Text in e-mail-Dateien erkennt und für eine weitere Bearbeitung bereitstellt. In einer zweiten bevorzugten Variante erkennt die Datenpaketempfangseinheit digitale Audiodaten in der Anlage einer e-mail und stellt diese für eine weitere Bearbeitung bereit.

Die Einrichtung umfasst des weiteren bevorzugt eine Nachrichtenabspieleinheit, die eine Textnachricht intern in ein Sprachsignal umwandelt und das umgewandelte Sprachsignal digital kodiert. Sofern die empfangenen Daten bereits Audiodaten enthalten, werden diese in der Nachrichtenabspieleinheit darauf geprüft, ob eine Formatkonvertierung und/oder Aufbereitung und/oder andere Bearbeitung zur weiteren Verwendung bei einer Übertragung über ein Telekommunikationsnetz erforderlich ist und wird eine solche ggf. durchgeführt. Das digital vorliegende Sprachsignal wird dann an die Schnittstelle zur Übertragung von Sprachsignalen weitergeleitet und von dort an mindestens ein Kommunikations-Endsystem übertragen.

Die Kommunikationseinrichtung umfasst erfindungsgemäß ebenfalls eine Einheit zur Interpretation von Innenband- und/oder Außenband-Informationen. Diese dient dazu, Bestätigungen oder andere Reaktionen zu erkennen, auszuwerten und dem Absender einer Datenmenge mitzuteilen, die von einem Kommunikations-Endsystem per Innenband-Signal oder per Außenband-Signal als Rekation auf ein abgespieltes Sprachsignal ausgesandt wurden.

Weiter ist in die Kommunikationseinrichtung bevorzugt eine Einheit zur Verbindungssteuerung integriert, die den Rufaufbau und eine Datenübertragung zu Kommunikations-Endsystemen steuert, an die die Sprachsignale zu übertragen sind, wobei ein Rufaufbau unter Verwendung von Empfängerinformationen erfolgt, die den über die erste Schnittstelle empfangenen Daten beigefügt sind. Der Verbindungsaufbau erfolt dabei standardgemäß in Anhängigkeit von den involvierten Netzen (z.B. Fest netz, Mobilfunknetz oder Paketvermittlungsnetz mit VoIP-Technik).

### Beschreibung eines bevorzugten Ausführungsbeispiels

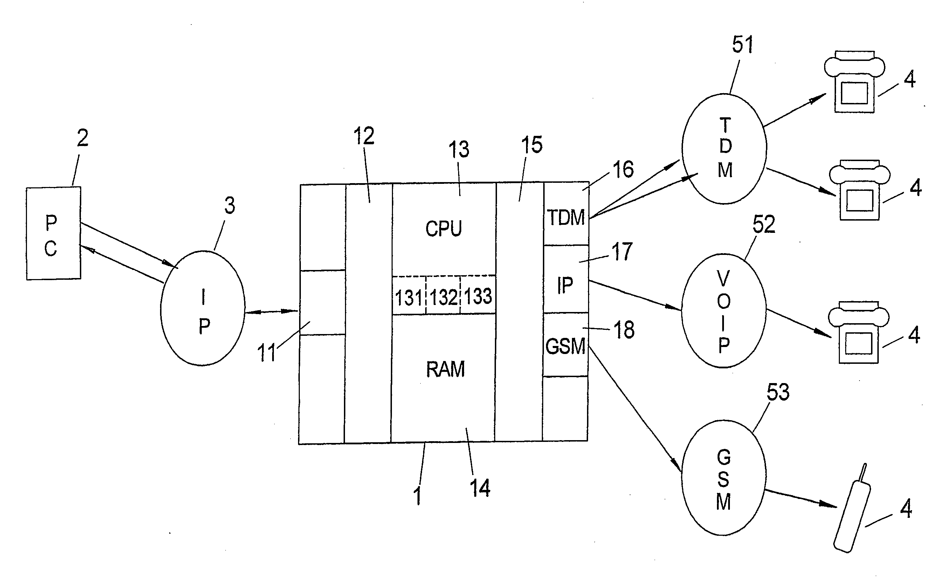

Die Erfindung wird nachfolgend unter Bezugnahme auf die Figur der Zeichnung anhand eines Ausführungsbeispieles näher erläutert.

Die einzige Figur zeigt schematisch eine Telekommunikationsanordnung mit einer Kommunikations-Einrichtung zur Umwandlung von Textdaten in Sprachsignale an der Schnittstelle mindestens zweier Kommunikationsnetze.

Die Kommunikationseinrichtung 1 ist über eine erste Schnittstelle 11 an ein Paketvermittlungsnetz 3 und über mehrere zweite Schnittstellen 16, 17, 18 an ein leitungsvermitteltes TDM-Telekommunikationsnetz 51, ein Paketvermittlungsnetz 52 und ein Mobilfunknetz 53 angeschlossen.

Die erste Schnittstelle 11 stellt eine Datenpaketschnittstelle dar, mittels der Datenpakete von dem Paketvermittlungsnetz 3 empfangen bzw. zu dem Paketvermittlungsnetz 3 übertragen werden können. Bei dem Paketvermittlungsnetz 3 handelt es sich beispielsweise um das Internet. Die Paketvermittlungsschnittstelle 11 ist beispielsweise als Ethernet-Schnittstelle realisiert. An das Paketvermittlungsnetz 3 sind eine Vielzahl von Endsystemen 2 angeschlossen, von denen eines beispielhaft als PC 2 dargestellt ist. Die Endsysteme sind beispielsweise über einen Internet-Serviceprovider oder direkt über eine DSL-Verbindung mit dem Paketvermittlungsnetz 3 verbunden.

Die zweiten Schnittstellen 16, 17, 18 sind als Sprachübertragungsschnittstellen ausgebildet, d. h. sie ermöglichen die Übertragung von Sprachdaten an Endgeräte 4, die an die Netze 51, 52, 53 angeschlossen sind. Die Integration von drei Schnittstellen 16, 17, 18 in die Kommunikationseinrichtung 1 ist dabei nur beispielhaft zu verstehen. Alternativ können auch nur eine einzige Schnittstelle (beispielsweise eine TDM-Schnittstelle) oder auch zusätzliche Schnittstellen (beispielsweise zu verschiedenen Mobilfunknetzen) vorgesehen sein.

Die Kommunikationseinrichtung 1 dient der Umwandlung von Textdaten, die von dem Paketvermittlungsnetz 3 empfangen werden, in Sprachinformationen und der Übertragung dieser Sprachinformationen an mindestens ein Endgerät 4, dass an eines der Kommunikationsnetze 51, 52, 53 angeschlossen ist.

Für die Realisierung dieser Funktionalität weist die Kommunikationseinrichtung 1 neben den bereits erwähnten Schnittstellen 11, 16, 17, 18 des Weiteren eine Datenpaketempfangseinheit 12, eine zentrale Steuereinheit 13 mit integriertem Speicher 14 und optional ein Koppelfeld 15 auf. Die zentrale Steuereinheit 13 ist bevorzugt als Mikroprozessor (CPU) ausgeführt und realisiert zusammen mit einer entsprechenden Software eine Nachrichtenabspieleinheit 131, eine Einheit zur Verbindungssteuerung 132 und eine Innenband- und/oder Außenband-Interpretationseinheit 133, die durch die gepunkteten Blöcke in der Figur angedeutet sind. Im Übrigen können auch die Datenpaketempfangseinheit 12 und das Koppelfeld 15 durch Software realisiert sein, die von der Steuereinheit 13 abgearbeitet wird. Neben einer bevorzugten Realisierung der genannten funktionellen Einheiten durch Software in Verbindung mit einer CPU können die jeweiligen Funktionalitäten alternativ jedoch auch als Hardware realisiert sein.

Die Datenpaketempfangseinheit 12 identifiziert einen Text in einem oder mehreren Datenpaketen, die ggf. wieder zusammengesetzt werden, und stellt diesen der Nachrichtenabspieleinheit 131 zur Verfügung. Die Nachrichtenabspieleinheit 131 weist eine Spracherzeugungssoftware auf, die Textdaten in ein Sprachsignal bzw. Sprachinformationen umwandelt. Die Sprachsignale liegen dabei aber natürlich nicht in analoger Form, sondern digital vor. Sie werden beispielsweise auf PCM-Pulsrahmen gegeben.

Die Einheit zur Verbindungssteuerung 132 nimmt in an sich bekannter Weise eine Signalisierung über die entsprechende Schnittstelle 16, 17, 18 und das jeweilige Kommunikationsnetz 51, 52, 53 zu einem gerufenen Endsystem 4 vor, zu dem die Sprachinformationen übertragen werden sollen. Die Zieladresse (z. B. die Telefonnummer des gerufenen Endsystems 4) ist dabei in den aus dem Paketvermittlungsnetz 3 erhaltenen Datenpaketen mit enthalten. Sofern die Sprachinformationen an eine Vielzahl von Endsystemen 4 übertragen werden soll, enthalten die aus dem Paketvermittlungsnetz 3 erhaltenen Datenpakete eine Liste von Empfängeradressen, beispielsweise eine Liste von Telefonnummern zu rufender Endsysteme 4.

Die Funktion der Innenband/Außenband-Interpretationseinheit 133 wird weiter unten bei der Erläuterung des Verfahrensablaufs im Einzelnen erläutert.

Das Koppelfeld 15, das optional vorgesehen ist, stellt eine Mehrzahl von Ausgängen bereit, auf die die zu übertragenden Daten gegeben werden können. Ein Koppelfeld ist insbesondere dann vorgesehen, wenn die Kommunikations-Einrichtung 1 zusätzlich Aufgaben eines Switches übernimmt.

Bei einem Verbindungsaufbau über die TDM-Schnittstelle 16 werden die Daten leitungsvermittelt über das TDM-Netz 51 zum Endsystem 4 übertragen. Bei einem Verbindungsaufbau über die IP-Schnittstelle 17 werden die Sprachdaten zunächst paketiert und an ein Paketvermittlungsnetz 52 übertragen. Dabei kann es sich bei dem Paketvermittlungsnetz 52 um das gleiche Paketvermittlungsnetz handeln wie das Paketvermittlungsnetz 3, über das die Textinformationen empfangen wurden. Es erfolgt eine Datenübertragung zum Endsystem 4 über an sich bekannte VoIP-Techniken (VoIP = Voice over IP). Bei einem Verbindungsaufbau und nachfolgender Datenübertragung über die GSM-Schnittstelle 18 werden die Daten über ein Mobilfunknetz 53 an das (Mobilfunk-) Endsystem 4 übertragen.

Das durch die beschriebene Telekommunikations-Infrastruktur realisierte Verfahren wird nachfolgend beispielhaft beschrieben. Es sei dabei angenommen, dass von dem Endsystem 2 eine bestimmte Information an eine Vielzahl von Endsystemen 4 übertragen werden soll. Die Information liegt in dem Endsystem 2 als Textinformation, beispielsweise als eine Textdatei vor.

Es handelt sich insofern um eine Datenmenge. Die Datenmenge enthält dabei auch die Adressen der Empfänger, an die die Textinformation gesandt werden soll. Die Datenmenge wird über das Paketvermittlungsnetz 3 an die Kommunikationseinrichtung 1 übertragen. Dies erfolgt bevorzugt durch eine e-Mail, die das Endsystem 2 an die Kommunikationseinrichtung 1 sendet. Die fraglichen Daten sind dabei entweder in der e-Mail direkt enthalten oder stellen eine Anlage einer e-Mail dar. Zur Datenübertragung über das Paketvermittlungsnetz 3 wird die Datenmenge in eines oder mehrere Datenpakete paketiert.

Die Datenpakete, die die Datenmenge bzw. e-mail bilden, werden über die Datenpaketschnittstelle 11 der Kommunikationseinrichtung 1 erfasst und der Nachrichtenabspieleinheit 12 zugeleitet. Diese identifiziert die eigentliche Textnachricht in der empfangenen e-Mail und stellt diese Textnachricht der Nachrichtenabspieleinheit 131 zur Verfügung. Die Nachrichtenabspieleinheit 131 wandelt die Textnachricht in eine Sprachnachricht um, wobei die entsprechenden Sprachdaten beispielsweise als PCM-Daten bereitgestellt werden (entsprechend ITU-T-Empfehlung G.711).

Die Einrichtung 132 zur Verbindungssteuerung baut nun unter Verwendung der Empfangsadresse bzw. der Empfangsadressen, die der empfangenen Datenmenge beigefügt war, ein oder mehrere Telekommunikationsverbindungen zu ein oder mehreren Endsystemen 4 auf. Dies erfolgt unter Verwendung mindestens einer der Schnittstellen 16, 17, 18 und mindestens einer der Kommunikationsnetze 51, 52, 53. Zusätzlich kann das Koppelfeld 15 aktiviert werden.

Nach Aufbau einer Verbindung zu den jeweiligen Endsystemen 4 wird dann die Sprachinformation über die jeweilige zweite Schnittstelle 16, 17, 18 an das Endsystem 4 übertragen. In dem Endsystem 4 wird die Nachricht akustisch wiedergegeben. Bei dem Endsystem 4 handelt es sich insbesondere um ein digitales oder analoges Telefon, ein Mobilfunkendgerät oder um einen PC mit einer Telefonie-Software.

Während des Verbindungsaufbaus und der Datenübertragung kommuniziert die Kommunikationseinheit 1 bevorzugt mit dem Absender 2, insbesondere hinsichtlich des Status des Verbindungsaufbaus und gegebenenfalls zur Übertragung von Informationen, die das Endsystem 4 in Beantwortung der abgespielten Sprachnachricht aussendet.

So ist bevorzugt vorgesehen, dass das gerufene Endsystem 4 den Erhalt einer Sprachansage durch die Aussendung eines Signalisierungsbefehles bestätigt. Dieser Signalisierungsbefehl kann durch eine Innenband- oder eine Außenbandsignalisierung übertragen werden. Eine Innenbandsignalisierung ist beispielsweise ein DTMF-Ton oder eine Sprachinformation, die von der Kommunikationseinheit 1, und dort insbesondere von der Innenband/Außenband-Interpretationseinheit 133 erkannt wird. Die Innenband-Information wird im Rahmen der bestehenden Verbindung zwischen der Kommunikationseinrichtung 1 und dem Endsystem 4 übertragen. Die Bestätigung kann alternativ als Außenband-Information, beispielsweise als e-Mail oder eine andere über das Internet übersandte Information an die Einheit 133 übertragen werden.

Dabei ist bevorzugt vorgesehen, dass die Bestätigung nicht nur eine Bestätigung darüber enthält, dass die fragliche Ansage erfolgreich abgespielt wurde. Die Bestätigung kann darüber hinaus auch eine semantisch interpretierbare Antwort auf eine Ansage enthalten, insbesondere eine JA- oder eine NEIN-Antwort. Die Sprachansage kann dabei zusätzlich die Information enthalten, welche Taste oder Tastenkombination der Nutzer betätigen muss, um eine JA-Antwort oder eine NEIN-Antwort zu erzeugen.

Dies wird beispielhaft näher erläutert für den Fall, dass der PC 2 eine Alarmierungszentrale der Freiwilligen Feuerwehr darstellt und die ausgesandte Datenmenge die Textinformation enthält, dass an dem Ort X ein Feuer ausgebrochen ist. Die Information wird einer Mehrzahl von Endsystemen 4 von Nutzern übersandt, die der Freiwilligen Feuerwehr angehören. Die entsprechende Adressenliste ist der Datenmenge beigefügt. Die Kommunikationseinrichtung 1 wandelt die Textinformation in eine entsprechende Sprachinformation um und versendet sie an die Mitglieder der Freiwilligen Feuerwehr des entsprechenden Ortes. Dabei fügt die Kommunikationseinrichtung 1 zusätzliche Informationen zur Steuerung der Reaktion auf die Sprachnachricht hinzu, beispielsweise die Sprachinformation: "Sofern Sie zur Brandbekämpfung bereitstehen, so drücken Sie bitte die "1"; sofern Sie zur Brandbekämpfung nicht bereitstehen, so drücken Sie bitte die "2"". Die ursprüngliche Sprachinformation wird zusammen mit dieser Zusatzinformation an die einzelnen Teilnehmer übersandt. In einer anderen Variante ist die Zusatzinformation bereits in die ursprüngliche Sprachinformation mit integriert.

Die Teilnehmer bzw. Endsysteme 4 reagieren in entsprechender Weise auf die Nachricht und die Aufforderung zur Reaktion (d.h. durch Drücken der einen oder der andern Taste) und die Reaktion wird dann an die Innenband-/Außenband-Interpretationseinheit 133 übertragen und von dieser an die Alarmierungszentrale 2 weitergeleitet, so dass diese innerhalb kürzester Zeit feststellen kann, wer zur Brandbekämpfung bereitsteht.

Sofern ein Verbindungsaufbau nicht erfolgreich ist, beispielsweise weil der gerufene Teilnehmer besetzt ist, der Anruf nicht angenommen wird oder sich lediglich der Anrufbeantworter meldet, wird diese Information ebenfalls an die Alarmierungszentrale 2 übertragen.

In einer einfacheren Version des beschriebenen Verfahrens teilt der gerufene Teilnehmer lediglich mit, dass er den Ruf empfangen hat. Für diesen Fall wird der eigentlichen Nachricht beispielsweise lediglich die Sprachnachricht zugefügt: Bitte drücken Sie die Taste "3", wenn Sie diese Nachricht gehört haben. Auch diese Bestätigungsinformation wird dann an den ursprünglichen Absender 2 weitergeleitet, so dass dieser Buch führen kann, wer die Nachricht erhalten hat.

Andere bevorzugte Anwendungen sind beispielsweise die Generierung von Informationsanrufen, dass beispielsweise die Reparatur des Kraftfahrzeugs des gerufenen Teilnehmers nun fertiggestellt ist, oder dass ein bestimmtes Produkt zur Abholung bereitsteht. Eine weitere bevorzugte Anwendung liegt in der Sprachwerbung innerhalb der gesetzlich erlaubten Grenzen.

In einer alternativen Ausgestaltung wird der an das Endsystem 4 übertragenen Sprachnachricht mittels der beim Aufbau der Verbindung übertragenen Signalisierungsinformationen auch direkt die Absenderadresse des aussendenden Endsystems 2 mitgeteilt, so dass eine Bestätigung (dann per AußenbandSignalisierung) auch direkt, unter Umgehung der Kommunikationseinrichtung 1, an das aussendende Endsystem 2 übertragen werden kann.

Die Kommunikationseinrichtung 1 ist im dargestellten Ausführungsbeispiel am Übergang zwischen verschiedenen Netzen 3, 51, 52, 53 angeordnet und stellt insofern ein Gateway dar. Die Kommunikationseinrichtung 1 kann jedoch ebenso in einem Switch, einem Router oder auch teilnehmerseitig in einer TK-Anlage oder einem lokalen Server realisiert sein.

In einer Abwandlung des beschriebenen Ausführungsbeispiels weist die ursprüngliche, von dem Endsystem 2 ausgesandte Datenmenge bereits ein Sprachsignal auf, beispielsweise in Form einer digitalen Audiodatei, die einer e-mail als Anlage beigefügt ist. In diesem Fall braucht in der Kommunikations-Einrichtung 1 keine Umwandlung in ein Sprachsignal mehr zu erfolgen. Stattdessen erkennt die Datenempfangseinheit 12 die Audio-Datei und übergibt diese an die Nachrichtenabspieleinheit 131. Diese prüft nun lediglich, ob die Audiodatei einer Formatkonvertierung und/oder einer Aufbereitung bedarf. Eine solche wird ggf. durchgeführt. Die Audiodaten sollen dabei insbesondere als PCM-Daten für eine weitere Übertragung über die Kommunikationsnetze 51, 52, 53 bereitgestellt werden. Im übrigen ergeben sich keine Änderungen gegenüber dem zuvor beschriebenen Ausführungsbeispiel. Weiter wird darauf hingewiesen, dass die Kommunikations-Einrichtung derart ausgestaltet sein kann, dass sie keine Umwandlung einer Textdatei in eine Sprachdatei durchführen kann. Sie dient dann ausschließlich der Realisierung des abgewandelten Ausführungsbeispiels.

## Patentansprüche

1. Verfahren zur Übertragung von Daten an mindestens ein Kommunikations-Endsystem (4), aufweisend die Schritte:
- Bereitstellen einer Datenmenge, die an mindestens ein Kommunikations-Endsystem (4) übertragen werden soll,
- Integrieren mindestens einer Empfangsadresse in die Datenmenge, wobei eine Empfangsadresse jeweils ein Kommunikations-Endsystem (4) identifiziert,
- Übertragen der Datenmenge von einem Absender (2) der Datenmenge über ein erstes Kommunikationsnetz (3) an eine Kommunikations-Einrichtung (1),
- Umwandeln der Datenmenge in ein Sprachsignal, sofern die Datenmenge nicht bereits ein Sprachsignal enthält,
- jeweils Aufbau einer Verbindung von der Kommunikations-Einrichtung (1) über das erste (3) oder ein zweites Kommunikationsnetz (51, 52, 53) zu einem Kommunikations-Endsystem (4) unter Verwendung der entsprechenden Empfangsadresse,
- Übertragen des Sprachsignals von der Kommunikations-Einrichtung (1) an das Kommunikations-Endsystem (4) jeweils bei Annahme der Verbindung, und
- Abspielen des Sprachsignals bei dem Kommunikations-Endsystem (4), wobei
- das erste Kommunikationsnetz (3) ein Paketvermittlungsnetz ist, und
- die Datenmenge als e-mail an die Kommunikations-Einrichtung (1) übertragen wird,
**dadurch gekennzeichnet, dass**
- bei erfolgreichem Abspielen des Sprachsignals bei dem Kommunikations-Endsystem (4) eine Bestätigung über den Empfang des Sprachsignals von dem Endsystem (4) ausgesandt wird, und
- eine semantisch deutbare Antwort des Nutzers des Kommunikations-Endsystems (4) auf das Sprachsignal beim Absender (2) der Datenmenge erfasst und ausgewertet wird, wobei dem Sprachsignal durch die Kommunikations-Einrichtung (1) Sprachinformationen mit Anweisungen hinzufügt sind, die dem Nutzer eine Mehrzahl von alternativen Reaktionsmöglichkeiten, wie der Nutzer des Kommunikations-Endsystems (4) auf das Sprachsignal antworten kann, und deren Auslösung mitteilen, oder das Sprachsignal bereits solche Informationen enthält.

2. Verfahren nach Anspruch 1, **dadurch gekennzeichnet, dass** das zweite Kommunikationsnetz (51, 53) ein Leitungsvermittlungsnetz ist und das Sprachsignal leitungsvermittelt zu einem Kommunikations-Endsystem (4) übertragen wird.

3. Verfahren nach Anspruch 1 oder 2, **dadurch gekennzeichnet, dass** das zweite Kommunikationsnetz (53) ein Mobilfunknetz ist und das Sprachsignal über mindestens eine Funkstrecke zu dem Kommunikations-Endsystem (4) übertragen wird.

4. Verfahren nach Anspruch 1, **dadurch gekennzeichnet, dass** eine Datenübertragung von der Kommunikations-Einrichtung (1) zu dem Kommunikations-Endsystem (4) per VoIP-Technik erfolgt.

5. Verfahren nach einem der vorangehenden Ansprüche, **dadurch gekennzeichnet, dass** das Bestätigen durch den Nutzer des Endsystems (4) ausgelöst wird.

6. Verfahren nach Anspruch 5, **dadurch gekennzeichnet, dass** die Bestätigung als Innenband-Signal übertragen wird.

7. Verfahren nach Anspruch 5, **dadurch gekennzeich**n e t, dass die Bestätigung als Außenband-Signal übertragen wird.

8. Verfahren nach einem der Ansprüche 5 bis 7, **dadurch gekennzeichnet, dass** die Bestätigung an die Kommunikations-Einrichtung (1) und von dieser an den Absender (2) der Datenmenge übertragen wird.

9. Verfahren nach einem der Ansprüche 5 bis 7, **dadurch gekennzeichnet, dass** die Bestätigung direkt an den Absender (2) der Datenmenge übertragen wird, wobei die Absenderinformation zusammen mit dem Sprachsignal von der Kommunikations-Einrichtung (1) an das Kommunikations-Endsystem (4) übertragen wird.

10. Verfahren nach einem der Ansprüche 5 bis 9, **dadurch gekennzeichnet, dass** dem Sprachsignal Sprachinformationen mit Anweisungen hinzufügt sind, wie der Empfang des Sprachsignals zu bestätigen ist, oder das Sprachsignal bereits solche Informationen enthält.

11. Verfahren nach einem der Ansprüche 5 bis 10, **dadurch gekennzeichnet, dass** eine Bestätigung eines erfolgreichen Abspielens des Sprachsignals durch eine definierte Taste oder Tastenkombination ausgelöst wird.

12. Verfahren nach einem der vorangehenden Ansprüche, **dadurch gekennzeichnet, dass** dem Sprachsignal Sprachinformationen mit Anweisungen hinzugefügt sind, wie der Nutzer des Kommunikations-Endsystems (4) eine JA-Antwort oder eine NEIN-Antwort erzeugt, oder das Sprachsignal bereits solche Informationen enthält.

13. Verfahren nach einem der vorangehenden Ansprüche, **dadurch gekennzeichnet, dass** das Kommunikations-Endsystem (4) ein digitales oder analoges Telefon oder ein Mobilfunkendgerät ist oder umfasst.

14. Verfahren nach einem der vorangehenden Ansprüche, **dadurch gekennzeichnet, dass** dass im Besetzt-Fall oder bei Nichtannahme des Rufes nach einer bestimmten Zeit ein erneuter Verbindungsaufbau versucht wird.

15. Verfahren nach einem der vorangehenden Ansprüche, **dadurch gekennzeichnet, dass** für den Fall, dass am Kommunikations-Endsystem eine Anrufannahme durch einen Anrufbeantworter erfolgt, das Sprachsignal auf den Anrufbeantworter gesprochen wird.

16. Verfahren nach einem der vorangehenden Ansprüche, **dadurch gekennzeichnet, dass** dem Absender (2) der Datenmenge durch die Kommunikations-Einrichtung (1) der Zustand des Verbindungsaufbaus und der Übertragung des Sprachsignals zu dem Kommunikations-Endsystem (4) mitgeteilt wird.

17. Verfahren nach einem der vorangehenden Ansprüche, **dadurch gekennzeichnet, dass** die Datenmenge eine Liste mit einer Mehrzahl von Empfangsadressen enthält und die Sprachinformation an eine Mehrzahl von Kommunikations-Endsystemen (4) übertragen wird.

18. Verfahren nach einem der vorangehenden Ansprüche, **dadurch gekennzeichnet, dass** die Datenmenge eine Textdatei ist oder enthält.

19. Verfahren nach einem der Ansprüche 1 bis 17, **dadurch gekennzeichnet, dass** die Datenmenge eine digitale Audiodatei ist oder enthält.

20. Verfahren nach einem der vorangehenden Ansprüche, **dadurch gekennzeichnet, dass** für den Fall, dass es sich bei der an der Kommunikations-Einrichtung (1) empfangenen Datenmenge bereits um ein Sprachsignal handelt, eine Formatkonvertierung und/oder Aufbereitung des Sprachsignals in der Kommunikations-Einrichtung (1) erfolgt.

21. Kommunikations-Einrichtung zur Durchführung des Verfahrens nach Anspruch 1, **gekennzeichnet durch**
- eine erste Schnittstelle (11) zum Empfang von als e-mail von einem Absender (2) übersandten Daten aus einem Paketvermittlungsnetz,
- mindestens eine zweite Schnittstelle (16, 17, 18) zur Übertragung von Sprachsignalen an ein Kommunikations-Endsystem (4), an dem die Sprachsignale abgespielt werden,
- eine Einrichtung (12, 13, 131), die vorgesehen und ausgebildet ist, von der ersten Schnittstelle (11) Daten zu erhalten und in Sprachsignale umzuwandeln, sofern sie noch nicht als Sprachsignale vorliegen, und die Sprachsignale an die Schnittstelle (16, 17, 18) zur Übertragung von Sprachsignalen weiterzuleiten,
**dadurch gekennzeichnet, dass**
- die Kommunikations-Einrichtung (1) zur Übertragung von Informationen, die das Kommunikations-Endsystem (4) in Beantwortung der abgespielten Sprachnachricht aussendet, mit dem Absender (2) kommuniziert, wobei
- die Kommunikations-Einrichtung (1) eine Einheit (133) zur Interpretation von Innenband- und/oder Außenband-Informationen aufweist, die ausgebildet ist,
o eine vom Kommunikations-Endsystem (4) ausgesandte Bestätigung über den Empfang der Sprachsignale zu erkennen, und
o eine semantisch deutbare Antwort des Nutzers des Endsystems (4) auf das Sprachsignal zu erfassen und an den Absender (2) zu übersenden,
- wobei dem Sprachsignal Sprachinformationen mit Anweisungen hinzufügt sind, die dem Nutzer eine Mehrzahl von alternativen Reaktionsmöglichkeiten, wie der Nutzer des Kommunikations-Endsystems (4) auf das Sprachsignal antworten kann, und deren Auslösung mitteilen, oder das Sprachsignal bereits solche Informationen enthält.

22. Kommunikationseinrichtung nach Anspruch 21, **gekennzeichnet durch** eine Datenpaketempfangseinheit (12), die ausgebildet ist, in den empfangenen Daten enthaltenen Text oder in den empfangenen Daten enthaltene digitale Audiodaten zu erkennen und für eine weitere Bearbeitung bereitzustellen.

23. Kommunikationseinrichtung nach Anspruch 22, **dadurch gekennzeichnet, dass** die Datenpaketempfangseinheit (12) ausgebildet ist, Text in e-mail-Dateien zu erkennen und für eine weitere Bearbeitung bereitzustellen.

24. Kommunikationseinrichtung nach Anspruch 22, **dadurch gekennzeichnet, dass** die Datenpaketempfangseinheit (12) digitale Audiodaten in der Anlage einer e-mail erkennt und für eine weitere Bearbeitung bereitstellt.

25. Kommunikationseinrichtung nach einem der Ansprüche 21 bis 24, **gekennzeichnet durch** eine Nachrichtenabspieleinheit (131), die eine Textnachricht intern in ein Sprachsignal umwandelt und das umgewandelte Sprachsignal digital kodiert.

26. Kommunikationseinrichtung nach einem der Ansprüche 21 bis 25, **gekennzeichnet durch** eine Nachrichtenabspieleinheit (131), die über die ersten Schnittstelle (11) erhaltene digitale Audiodaten darauf prüft, ob eine Formatkonvertierung und/oder Aufbereitung erforderlich ist und eine solche ggf. durchführt.

27. Kommunikationseinrichtung nach einem der Ansprüche 21 bis 26, **gekennzeichnet durch** eine Einheit zur Verbindungssteuerung (132), die den Rufaufbau und eine Datenübertragung zu den Kommunikations-Endsystemen (4) steuert, an die die Sprachsignale zu übertragen sind, wobei ein Rufaufbau unter Verwendung von Empfängerinformationen erfolgt, die über die erste Schnittstelle (11) empfangenen Daten beigefügt sind.

28. Kommunikationseinrichtung nach einem der Ansprüche 21 bis 27, **dadurch gekennzeichnet, dass** die Kommunikationseinrichtung (1) des Weiteren ein Koppelfeld (15) umfasst.

29. Kommunikationseinrichtung nach einem der Ansprüche 21 bis 28, **dadurch gekennzeichnet, dass** die mindestens eine Schnittstelle (16, 17, 18) zur Übertragung von Sprachsignalen eine TDM-, eine Mobilfunk- oder eine VoIP-Schnittstelle ist.

## Claims

1. A method for transmitting data to at least one communication end system (4), having the following steps:
- a volume of data which needs to be transmitted to at least one communication end system (4) is provided,
- at least one reception address is integrated into the volume of data, with a reception address respectively identifying a communication end system (4),
- the volume of data of a sender (2) of the volume of data is transmitted via a first communication network (3) to a communication device (1),
- the volume of data is converted into a voice signal provided that the volume of data does not already contain a voice signal,
- a connection is respectively set up from the communication device (1) via the first (3) or a second communication network (51, 52, 53) to a communication end system (4) using the appropriate reception address,
- the voice signal is transmitted from the communication device (1) to the communication end system (4) whenever the connection is accepted, and
- the voice signal is played back on the communication end system (4), wherein
- the first communication network (3) is a packet-switched network, and
- the volume of data is transmitted to the communication device (1) as an e-mail,
**characterized in that**
- upon successful playback of the voice signal on the communication end system (4) an acknowledgement about reception of the voice signal by the end system (4) is sent, and
- a semantically interpretable response from the user of the end system (4) to the voice signal by the sender (2) of the volume of data is detected and evaluated, wherein the voice signal has voice information added to it with instructions which inform the user of a plurality of alternative reaction options, regarding how the user of the communication end system (4) can respond to the voice signal and triggering thereof, or the voice signal already contains such information.

2. The method as claimed in claim 1, **characterized in that** the second communication network (51, 53) is a circuit-switched network and the voice signal is transmitted to a communication end system (4) by means of circuit switching.

3. The method as claimed in claim 1 or 2, **characterized in that** the second communication network (53) is a mobile radio network and the voice signal is transmitted to the communication end system (4) via at least one radio link.

4. The method as claimed in claim 1, **characterized in that** data are transmitted from the communication device (1) to the communication end system (4) using VoIP technology.

5. The method as claimed in one of the preceding claims, **characterized in that** the acknowledgement is triggered by the user of the end system (4).

6. The method as claimed in claim 5, **characterized in that** the acknowledgement is transmitted as an inband signal.

7. The method as claimed in claim 5, **characterized in that** the acknowledgement is transmitted as an out-of-band signal.

8. The method as claimed in one of claims 5 to 7, **characterized in that** the acknowledgement is transmitted to the communication device (1) and from this to the sender (2) of the volume of data.

9. The method as claimed in one of claims 5 to 7, **characterized in that** the acknowledgement is transmitted directly to the sender (2) of the volume of data, with the sender information being transmitted together with the voice signal from the communication device (1) to the communication end system (4).

10. The method as claimed in one of claims 5 to 9, **characterized in that** the voice signal has voice information added to it with instructions regarding how to acknowledge reception of the voice signal, or the voice signal already contains such information.

11. The method as claimed in one of claims 5 to 10, **characterized in that** an acknowledgement of successful playback of the voice signal is triggered by a defined key or key combination.

12. The method as claimed in one of the preceding claims, **characterized in that** the voice signal has voice information added to it with instructions regarding how the user of the communication end system (4) produces a YES response or a NO response, or the voice signal already contains such information.

13. The method as claimed in one of the preceding claims, **characterized in that** the communication end system (4) is or comprises a digital or analog telephone or a mobile radio terminal.

14. The method as claimed in one of the preceding claims, **characterized in that** a Busy situation or nonacceptance of the call involves an attempt being made to set up a fresh connection after a particular time.

15. The method as claimed in one of the preceding claims, **characterized in that** if the communication end system accepts a call using a telephone answering machine then the voice signal is spoken onto the telephone answering machine.

16. The method as claimed in one of the preceding claims, **characterized in that** the sender (2) of the volume of data is informed by the communication device (1) of the state of the connection setup and the transmission of the voice signal to the communication end system (4).

17. The method as claimed in one of the preceding claims, **characterized in that** the volume of data contains a list with a plurality of reception addresses, and the voice information is transmitted to a plurality of communication end systems (4).

18. The method as claimed in one of the preceding claims, **characterized in that** the volume of data is or contains a text file.

19. The method as claimed in one of claims 1 to 17, **characterized in that** the volume of data is or contains a digital audio file.

20. The method as claimed in one of the preceding claims, **characterized in that** if the volume of data received on the communication device (1) is already a voice signal then format conversion and/or conditioning of the voice signal takes place in the communication device (1).

21. A communication device for carrying out the method as claimed in claim 1, **characterized by**
- a first interface (11) for receiving data sent as an e-mail of a sender (2) from a packet-switched network,
- at least one second interface (16, 17, 18) for transmitting voice signals to a communication end system (4) on which the voice signals are played back,
- a device (12, 13, 131) which is provided and designed to receive data from the first interface (11) and to convert them into voice signals, provided that they are not yet in the form of voice signals, and to forward the voice signals to the interface (16, 17, 18) for transmitting voice signals,
**characterized in that**
- the communication device (1) communicates with the sender (2) for the transmission of information which the communication end system (4) sends in response to the voice message which has been played back, wherein
- the communication device (1) comprises a unit (133) for interpreting in band and/or out-of-band information which is designed to
o recognize an acknowledgement about reception of the voice signals which is sent by the communication end system (4), and
o detecting a semantically interpretable response from the user of the end system (4) to the voice signal and sending to the sender (2),
- wherein the voice signal has voice information added to it with instructions which inform the user of a plurality of alternative reaction options, regarding how the user of the communication end system (4) can respond to the voice signal and triggering thereof, or the voice signal already contains such information.

22. The communication device as claimed in claim 21, **characterized by** a data packet reception unit (12) which is designed to recognize text contained in the received data or digital audio data contained in the received data and to make it/them available for further treatment.

23. The communication device as claimed in claim 22, **characterized in that** the data packet reception unit (12) is designed to recognize text in e-mail files and to make it available for further treatment.

24. The communication device as claimed in claim 22, **characterized in that** the data packet reception unit (12) recognizes digital audio data in the attachment to an e-mail and makes them available for further treatment.

25. The communication device as claimed in one of claims 21 to 24, **characterized by** a message playback unit (131) which converts a text message internally into a voice signal and digitally encodes the converted voice signal.

26. The communication device as claimed in one of claims 21 to 25, **characterized by** a message playback unit (131) which checks digital audio data received by the first interface (11) to determine whether format conversion and/or conditioning is required and performs such processing if appropriate.

27. The communication device as claimed in one of claims 21 to 26, **characterized by** a unit for connection control (132) which controls the call setup and any data transmission to the communication end systems (4) to which the voice signals are to be transmitted, a call being set up using receiver information which has been appended to data received by the first interface (11).

28. The communication device as claimed in one of claims 21 to 27, **characterized in that** the communication device (1) also comprises a switching matrix (15).

29. The communication device as claimed in one of claims 21 to 28, **characterized in that** the at least one interface (16, 17, 18) for transmitting voice signals is a TDM, mobile radio or VoIP interface.

## Revendications

1. Procédé de transmission de données à au moins un système terminal de communication (4), présentant les étapes suivantes consistant à :
- fournir une quantité de données devant être transmise à au moins un système terminal de communication (4),
- intégrer au moins une adresse de réception dans la quantité de données, une adresse de réception identifiant respectivement un système terminal de communication (4),
- transmettre la quantité de données depuis un expéditeur (2) de la quantité de données à un dispositif de communication (1) par l'intermédiaire d'un premier réseau de communication (3),
- convertir la quantité de données en un signal vocal, dans la mesure où la quantité de données ne contient pas déjà un signal vocal,
- établir respectivement une liaison entre le dispositif de communication (1) et un système terminal de communication (4) en passant par le premier réseau de communication (3) ou par un deuxième réseau de communication (51, 52, 53) en utilisant l'adresse de réception correspondante,
- transmettre le signal vocal depuis le dispositif de communication (1) au système terminal de communication (4) respectivement en prenant en charge la liaison, et
- écouter le signal vocal dans le système terminal de communication (4),
- le premier réseau de communication (3) étant un réseau de commutation par paquets, et
- la quantité de données étant transmise sous la forme d'un e-mail au dispositif de communication (1),
**caractérisé en ce**
- **qu'**une confirmation de réception du signal vocal par le système terminal (4) est envoyée lorsque le signal vocal est écouté avec succès dans le système terminal de communication (4),
et
- **qu'**une réponse de l'utilisateur du système terminal de communication (4) au signal vocal interprétable sémantiquement est détectée et analysée chez l'expéditeur (2) de la quantité de données, le signal vocal comprenant des instructions étant ajoutées au signal vocal par le dispositif de communication (1), lesquelles délivrent à l'utilisateur une pluralité d'alternatives en termes de possibilités de réaction concernant la manière avec laquelle l'utilisateur du système terminal de communication (4) peut répondre au signal vocal, ainsi que le déclenchement desdites alternatives, ou bien le signal vocal contient déjà des informations de ce type.

2. Procédé selon la revendication 1, **caractérisé en ce que** le deuxième réseau de communication (51, 53) est un réseau de commutation de circuits, et **en ce que** le signal vocal est transmis par commutation de circuits à un système terminal de communication (4).

3. Procédé selon la revendication 1 ou 2, **caractérisé en ce que** le deuxième réseau de communication (53) est un réseau de communication radio mobile, et **en ce que** le signal vocal est transmis au système terminal de communication (4) par l'intermédiaire d'au moins une liaison radio.

4. Procédé selon la revendication 1, **caractérisé en ce qu'**une transmission de données entre le dispositif de communication (1) et le système terminal de communication (4) est effectuée par la technique Voix sur IP (VoIP).

5. Procédé selon l'une quelconque des revendications précédentes, **caractérisé en ce que** la confirmation est déclenchée par l'utilisateur du système terminal (4).

6. Procédé selon la revendication 5, **caractérisé en ce que** la confirmation est transmise sous la forme d'un signal à bande intérieure.

7. Procédé selon la revendication 5, **caractérisé en ce que** la confirmation est transmise sous la forme d'un signal à bande extérieure.

8. Procédé selon l'une quelconque des revendications 5 à 7, **caractérisé en ce que** la confirmation est transmise au dispositif de communication (1), puis est transmise par ce dernier à l'expéditeur (2) de la quantité de données.

9. Procédé selon l'une quelconque des revendications 5 à 7, **caractérisé en ce que** la confirmation est transmise directement à l'expéditeur (2) de la quantité de données, l'information d'expéditeur étant transmise conjointement avec le signal vocal par le dispositif de communication (1) au système terminal de communication (4).

10. Procédé selon l'une quelconque des revendications 5 à 9, **caractérisé en ce que** des informations vocales comprenant des instructions sont ajoutées au signal vocal concernant la manière avec laquelle la réception du signal vocal doit être confirmée, ou **en ce que** le signal vocal contient déjà des informations de ce type.

11. Procédé selon l'une quelconque des revendications 5 à 10, **caractérisé en ce qu'**une confirmation d'une écoute effectuée avec succès du signal vocal est déclenchée par une touche définie ou par une combinaison de touches définie.

12. Procédé selon l'une quelconque des revendications précédentes, **caractérisé en ce que** des informations vocales comprenant des instructions sont ajoutées au signal vocal concernant la manière avec laquelle l'utilisateur du système terminal de communication (4) génère une réponse positive ou une réponse négative, ou **en ce que** le signal vocal contient déjà des informations de ce type.

13. Procédé selon l'une quelconque des revendications précédentes, **caractérisé en ce que** le système terminal de communication (4) est ou comprend un téléphone numérique ou analogique ou un appareil terminal de communication radio mobile.

14. Procédé selon l'une quelconque des revendications précédentes, **caractérisé en ce qu'**une tentative d'établir à nouveau une liaison est effectuée en cas d'occupation ou en cas de rejet de l'appel après une certaine durée.

15. Procédé selon l'une quelconque des revendications précédentes, **caractérisé en ce que** si une réception d'appel est effectuée par un répondeur-enregistreur sur le système terminal de communication, le signal vocal est émis au répondeur-enregistreur.

16. Procédé selon l'une quelconque des revendications précédentes, **caractérisé en ce que** le statut de l'établissement de liaison et de la transmission du signal vocal au système terminal de communication (4) est communiqué à l'expéditeur (2) de la quantité de données par le dispositif de communication (1).

17. Procédé selon l'une quelconque des revendications précédentes, **caractérisé en ce que** la quantité de données contient une liste comprenant une pluralité d'adresses de destination, et **en ce que** l'information vocale est transmise à une pluralité de systèmes terminaux de communication (4).

18. Procédé selon l'une quelconque des revendications précédentes, **caractérisé en ce que** la quantité de données est ou contient un fichier texte.

19. Procédé selon l'une quelconque des revendications 1 à 17, **caractérisé en ce que** la quantité de données est ou contient un fichier audio numérique.

20. Procédé selon l'une quelconque des revendications précédentes, **caractérisé en ce que** si la quantité de données reçue par le dispositif de communication (1) est déjà un signal vocal, une conversion de format et/ou une préparation du signal vocal sont effectuées dans le dispositif de communication (1).

21. Dispositif de communication servant à mettre en oeuvre le procédé selon la revendication 1, **caractérisé par**
- une première interface (11) servant à recevoir des données envoyées sous la forme d'un e-mail par un expéditeur (2) en provenance d'un réseau de commutation par paquets,
- au moins une deuxième interface (16, 17, 18) servant à transmettre des signaux vocaux à un système terminal de communication (4), au niveau duquel les signaux vocaux sont écoutés,
- un dispositif (12, 13, 131) prévu et réalisé pour obtenir de la première interface (11) des données et les convertir en des signaux vocaux dans la mesure où ils ne sont pas disponibles sous la forme de signaux vocaux, et pour transférer les signaux vocaux à l'interface (16, 17, 18) servant à transmettre des signaux vocaux,
**caractérisé en ce**
- **que** le dispositif de communication (1) servant à transmettre des informations que le système terminal de communication (4) envoie en réponse au message vocal écouté communique avec l'expéditeur (2),
- le dispositif de communication (1) présentant une unité (133) servant à interpréter des informations de bande intérieure et/ou de bande extérieure, laquelle unité est réalisée
-- pour identifier une confirmation de la réception des signaux vocaux envoyée par le système terminal de communication (4) et
-- pour détecter une réponse de l'utilisateur du système terminal (4) au signal vocal interprétable sémantiquement et pour l'envoyer à l'expéditeur (2),
- des informations vocales comprenant des instructions étant ajoutées au signal vocal, lesquelles délivrent à l'utilisateur une pluralité d'alternatives en termes de possibilités de réaction concernant la manière avec laquelle l'utilisateur du système terminal de communication (4) peut répondre au signal vocal, ainsi que le déclenchement desdites alternatives, ou bien le signal vocal contient déjà des informations de ce type.

22. Dispositif de communication selon la revendication 21, **caractérisé par** une unité de réception de paquets de données (12), qui est réalisée pour identifier du texte contenu dans les données reçues ou des données audio numériques contenues dans les données reçues et pour les mettre à disposition pour un traitement ultérieur.

23. Dispositif de communication selon la revendication 22, **caractérisé en ce que** l'unité de réception de paquets de données (12) est réalisée pour identifier du texte dans des fichiers e-mail et pour le mettre à disposition pour un traitement ultérieur.

24. Dispositif de communication selon la revendication 22, **caractérisé en ce que** l'unité de réception des paquets de données (12) identifie des données audio numériques jointes en pièces jointes à un e-mail et les met à disposition pour un traitement ultérieur.

25. Dispositif de communication selon l'une quelconque des revendications 21 à 24, **caractérisé par** une unité d'écoute de messages (131), qui convertit en interne un message texte en un signal vocal et qui code de manière numérique le signal vocal converti.

26. Dispositif de communication selon l'une quelconque des revendications 21 à 25, **caractérisé par** une unité d'écoute de message (131), qui vérifie dans le cas des données audio numériques obtenues par l'intermédiaire de la première interface (11) si une conversion de format et/ou une préparation sont requises et qui exécute le cas échéant ces dernières.

27. Dispositif de communication selon l'une quelconque des revendications 21 à 26, **caractérisé par** une unité servant à commander une liaison (132), qui commande l'établissement de l'appel et une transmission de données aux systèmes terminaux de communication (4), auxquels les signaux vocaux sont à transmettre, un appel étant établi en utilisant des informations de destinataire, qui sont jointes aux données reçues par l'intermédiaire de la première interface (11).

28. Dispositif de communication selon l'une quelconque des revendications 21 à 27, **caractérisé en ce que** le dispositif de communication (1) comprend en outre un champ de couplage (15).

29. Dispositif de communication selon l'une quelconque des revendications 21 à 28, **caractérisé en ce que** l'interface (16, 17, 18) au moins au nombre de une servant à transmettre des signaux vocaux est une interface TDM, une interface de communication radio mobile ou une interface de téléphonie Voix sur IP (VoIP).
